# EUROPÄISCHE PATENTSCHRIFT

(11) **EP 2 550 444 B1**
(45) Veröffentlichungstag und Bekanntmachung des Hinweises auf die Patenterteilung: **10.04.2019**
(21) Anmeldenummer: 11709329.4
(22) Anmeldetag: 21.02.2011
(51) Int. Cl.: F02D 41/24, F02D 41/00

(54) **VERFAHREN ZUM BETREIBEN EINER BRENNKRAFTMASCHINE**
METHOD FOR OPERATING AN INTERNAL COMBUSTION ENGINE
PROCÉDÉ PERMETTANT DE FAIRE FONCTIONNER UN MOTEUR À COMBUSTION INTERNE

(30) Priorität: 20.03.2010 DE 102010012139
(43) Veröffentlichungstag der Anmeldung: 30.01.2013
(73) Patentinhaber: Volkswagen Aktiengesellschaft, 38440 Wolfsburg (DE)
(72) Erfinder: HEUCK, Markus, 38159 Vechelde (DE); MANNIGEL, Dieter, 38116 Braunschweig (DE); POHL, Detlev, 59939 Olsberg (DE); SCHULZE, Stefan, 04509 Delitzsch (DE)
(74) Vertreter: Gulde & Partner
(86) Internationale Anmeldenummer: PCT/EP2011/000813
(87) Internationale Veröffentlichungsnummer: WO 2011/116859

(56) Entgegenhaltungen:
- EP-A2- 0 893 590
- DE-A1- 19 937 096
- DE-A1-102008 042 146
- US-A- 5 964 200

## Beschreibung

Die Erfindung betrifft ein Verfahren zum Betreiben einer Brennkraftmaschine, wobei in Abhängigkeit von einer Differenz eines Sollwertes und eines Istwertes eines die Verbrennung beeinflussenden ersten Parameters eine Regelgröße bestimmt wird, gemäß dem Oberbegriff des Patentanspruchs 1.

Es ist bekannt, ein Kennfeld für das Luftregelungssystem einer Brennkraftmaschine im stationären Betrieb einzurichten. Auf dieses stationäre Kennfeld wird im dynamischen Betrieb der Brennkraftmaschine zugegriffen, wobei die Fahrdynamik häufig bevorzugt wird.

Aus der DE 698 26 786 T2 ist ein Saugluftsteuerungssystem für eine Brennkraftmaschine mit Abgasrückführvorrichtung bekannt, wobei die zurückgeführte Abgasmenge (AGR-Menge) auf der Grundlage eines Vergleichs eines Luftladeverhältnisses mit einem Sollluftladeverhältnis gesteuert wird. Ein Mittel zur Bestimmung der Soll-AGR-Ventilöffnung bestimmt aufgrund eines Kennfeldes, in dem Basis-AGR-Ventilöffnungen in Bezug auf Motordrehzahlen und den Sollwert des vom Motor abgegebenen Drehmomentes abgelegt sind, entsprechend der detektierten Motordrehzahl und dem Sollwert des vom Motor abgegebenen Drehmomentes eine Basis-AGR-Ventilöffnung. Weiterhin berechnet das Mittel zur Bestimmung der Soll-AGR-Ventilöffnung im geschlossenen Regelkreis aufgrund der Basis-AGR-Ventilöffnung die Soll-AGR-Ventilöffnung sowie einen Korrekturwert, welcher entsprechend einer Differenz zwischen dem Sollwert der Luftladung und einer Luftlademenge bestimmt wird, welche aufgrund der detektierten Ansaugluftmenge berechnet wird. Somit erfolgt eine zweidimensionale Regelung der AGR-Ventilöffnung, aufgrund des Vergleiches von Soll- und Istwert der Luftladung.

Das Dokument DE 199 37 096 A1 offenbart ein Steuersystem für einen Verbrennungsmotor vom Zylindereinspritztyp, enthaltend: Kraftstoffeinspritzventile zum Einspritzen von Kraftstoff jeweils direkt in die Zylinder des Verbrennungsmotors; eine Zündvorrichtung zum Zünden des Kraftstoffs jeweils in den Zylindern; eine Einlassluftströmungs-Reguliervorrichtung zum Regulieren der Menge der Einlassluft, die dem Verbrennungsmotor zugeführt wird; Sensoren zahlreicher Typen zum Detektieren der Betriebszustände des Verbrennungsmotors mindestens einer Motordrehzahl, eines Gaspedal-Eindrückhubs und der Einlassluftmenge; eine Steuervorrichtung zum Steuern der Kraftstoffeinspritzventile, der Zündvorrichtung und der Einlassluftströmungs-Reguliervorrichtung in Übereinstimmung mit den Motorbetriebszuständen; dadurch gekennzeichnet, dass die Steuervorrichtung ferner enthält eine Verbrennungsmodus-Bestimmungsvorrichtung zum selektiven Bestimmen mehrerer Verbrennungsmodi in Übereinstimmung mit der Motordrehzahl und dem Gaspedal-Eindrückhub; eine Einstellvorrichtung für das gewünschte Luft/Kraftstoff-Verhältnis zum Festlegen eines gewünschten Luft/Kraftstoff-Verhältnisses in Übereinstimmung mit dem Verbrennungsmodus auf der Grundlage der Motordrehzahl und dem Gaspedal-Eindrückhub; eine Berechnungsvorrichtung für die gewünschte Kraftstoffeinspritzmenge zum arithmetischen Bestimmen einer gewünschten Kraftstoffeinspritzmenge in Übereinstimmung mit dem gewünschten Luft/Kraftstoff-Verhältnis; und eine Steuerparameter Berechnungsvorrichtung zum arithmetischen Bestimmen der Steuerparameter für die Kraftstoffeinspritzventile und die Zündvorrichtung in Übereinstimmung mit dem Verbrennungsmodus auf der Grundlage der Motordrehzahl und mindestens einer Grösse aus der Gruppe Gaspedal-Eindrückhub, Einlassluftmenge und gewünschte Kraftstoffeinspritzmenge.

Aus dem Dokument US 5,964,200 ist ein Steuersystem für einen Verbrennungsmotor zum Regulieren der Einlassluftmenge bekannt.

Beide Verfahren sind jedoch nur auf einen stationären Betrieb des Verbrennungsmotors ausgerichtet.

Der Erfindung liegt die Aufgabe zugrunde, einen kontrollierten Einfluss auf die Betriebsparameter der Brennkraftmaschine im dynamischen Betrieb zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass die Regelgröße für einen die Verbrennung beeinflussenden zweiten Parameter und zusätzlich in Abhängigkeit von mindestens zwei weiteren Betriebsparametern der Brennkraftmaschine bestimmt wird.

Dies hat den Vorteil, dass auch im dynamischen Betrieb der Brennkraftmaschine ein idealer Kompromiss hinsichtlich Emissionen, Fahrverhalten und Verbrauch erzielt wird. Das instationäre Verhalten des langsamen Teils des Luftsystems, insbesondere der ladedruckabhängige Teil, wird erkannt und beeinflusst in geeigneter Weise den schnellen Teil des System, wie beispielsweise die AGR-Rate.

Eine besonders effektive und gleichzeitig einfach sowie kostengünstig zu applizierende Adaption des Luftregelungssystems im dynamischen Betrieb der Brennkraftmaschine mit hoher Anzahl an Variationsmöglichkeiten hinsichtlich der Korrektur erzielt man dadurch, dass zur Bestimmung der Regelgröße aus einer Mehrzahl vorbestimmte Kennfelder, welche die Regelgröße in Abhängigkeit von den mindestens zwei weiteren Betriebsparametern der Brennkraftmaschine enthalten, ein Kennfeld in Abhängigkeit von der Differenz des Sollwertes und des Istwertes des die Verbrennung beeinflussenden ersten Parameters ausgewählt wird und aus diesem ausgewählten Kennfeld in Abhängigkeit von den mindestens zwei weiteren Betriebsparametern der Brennkraftmaschine die Regelgröße bestimmt wird.

Dadurch, dass der erste Parameter eine Verbrennungsluftfüllung oder ein Ladedruck und der zweite Parameter eine Abgasrückführrate (AGR-Rate) oder eine Abgasrückführmasse (AGR-Masse) ist, wird das instationäre Verhalten des langsamen Teils des Luftsystems (ladedruckabhängiger Teil des Luftsystems) ausgewertet und mittels dieser Information in geeigneter Weise der schnellere Teil des Luftsystems, wie beispielsweise die AGR-Rate, beeinflusst.

Eine besonders gute Adaption des Luftregelungssystems im dynamischen Betrieb der Brennkraftmaschine erzielt man dadurch, dass die mindestens zwei weiteren Betriebsparameter der Brennkraftmaschine jeweils mindestens zwei der folgenden Betriebsparameter umfassen, eine Last, eine Drehzahl, eine Regelabweichung einer Füllungsmasse, eine Regelabweichung eines Verbrennungsluftmassendurchsatzes, einen Gradient einer Füllungsmasse oder eine Temperatur in einem Saugrohr für Verbrennungsluft der Brennkraftmaschine.

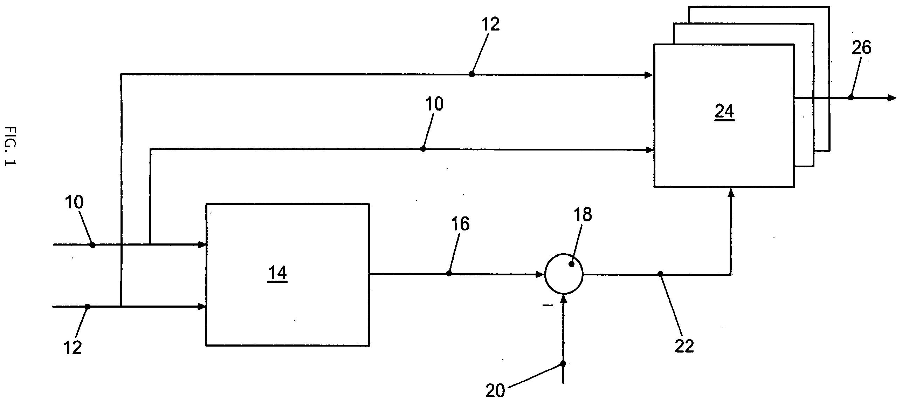

Die Erfindung wird im Folgenden anhand der Zeichnung näher erläutert. Diese zeigt in der einzigen Fig. ein schematisches Ablaufdiagramm einer bevorzugten Ausführungsform einer erfindungsgemäßen Luftsystemregelung für einen dynamischen Betrieb der Brennkraftmaschine.

Bei dem in der einzigen Fig. dargestellten Verfahren zum Betreiben einer Brennkraftmaschine wird aus zwei Betriebsparametern 10, 12 der Brennkraftmaschine an einem Betriebspunkt in einem Block 14 "Soll-Füllungswertermittlung" ein Sollwert 16 für eine Verbrennungsluftfüllung ermittelt. Diese zwei Betriebsparameter des momentanen Betriebspunktes umfassen beispielsweise eine momentane Last 10 und eine momentane Drehzahl 12 der Brennkraftmaschine an diesem Betriebspunkt. Dieser so ermittelte Sollwert 16 für die Verbrennungsluftfüllung wird bei 18 "Vergleicher" mit einem Istwert 20 für die Verbrennungsluftfüllung verglichen und eine Differenz 22 "Sollwert minus Istwert der Verbrennungsluftfüllung" bestimmt. Der Ausdruck "Verbrennungsluftfüllung" bezeichnet hierin eine Füllung eines Zylinders einer Hubkolben-Brennkraftmaschine, wobei die Füllung sowohl eine Frischluftmasse als auch ein Gemisch aus Frischluftmasse und rückgeführtem Abgas umfasst.

In einem Block 24 "mehrere Last-Drehzahl-Kennfelder" sind eine Mehrzahl von verschiedenen Last-Drehzahl-Kennfeldern hinterlegt, die jeweils für entsprechende Kombinationen aus Last und Drehzahl eine bestimmte Regelgröße 26 für einen die Verbrennung beeinflussenden Parameter enthalten. In Abhängigkeit von der Differenz 22 wird zunächst aus der Mehrzahl der hinterlegten Last-Drehzahl-Kennfelder eines ausgewählt und mittels dieses ausgewählten Kennfeldes wird anschließend aus der Last 10 und der Drehzahl 12 ein Wert für die Regelgröße 26 bestimmt. Hierdurch wird bei der Bestimmung der Regelgröße 26 bei einem dynamischen Übergang der Brennkraftmaschine von einem Betriebszustand zu einem anderen Betriebszustand eine zusätzliche Korrektur bzw. Adaption der Regelgröße 26 erzielt. Die Regelgröße 26 ist beispielsweise eine Abgasrückführrate (AGR-Rate), also eine schnelle Führungsgröße für den Luftpfad der Brennkraftmaschine.

Die Verwendung der Soll- und Istwerte 16, 20 für die Verbrennungsluftfüllung oder den Ladedruck ist zwingend notwendig. Es wird erfindungsgemäß vorgeschlagen zur Auswahl des jeweiligen Kennfeldes aus Block 24 eine langsame, absolute Führungsgröße für den Bereich des Luftpfades der Brennkraftmaschine, welcher abhängig vom Ladedruck ist, zu verwenden. Auch die Verwendung von Last und Drehzahl als die mindestens zwei Betriebsparameter 10, 12 der Brennkraftmaschirie an einem Betriebspunkt wird zusätzlich vorgeschlagen. Es können den Betriebspunkt charakterisierende Betriebsparameter verwendet werden. In diesem Fall enthalten die Kennfelder in Block 24 entsprechende Zuordnungen von diesen den Betriebspunkt charakterisierenden Betriebsparametern zu einer jeweiligen Regelgröße 26.

Zur genaueren Betrachtung des dynamischen Betriebsbereiches der Brennkraftmaschine, der sich hauptsächlich vom stationären Bereich dadurch unterscheidet, dass der Ladedruck noch nicht seinen stationären Wert erreicht hat, wendet sich die Erfindung von einem einzigen Basiskennfeld ab. Durch Hinzufügen mindestens einer weiteren Dimension in Block 24 in Form der Auswahl aus mehreren Kennfeldern, wird die Ermittlung der Regelgröße im dynamischen Bereich adaptierbar. So kann durch Berücksichtigung des Einflusses des Ladedruckes innerhalb der Sollwertstruktur selbst im dynamischen Betriebsbereich ein NOₓ-Partikel-Tradeoff genauer eingestellt werden. Die Parametrierung erfolgt beispielsweise am Prüfstand aber auch am Fahrzeug selbst.

Beispiele für geeignete Dimensionen bzw. Größen der mindestens zwei Betriebsparameter 10, 12 der Brennkraftmaschine an einem Betriebspunkt sind neben dem abgegeben Drehmoment (Last) und der Drehzahl auch die Regelabweichung der Füllungs-/Durchsetzungsmasse und/oder der Gradient der Füllungsmasse und/oder die Temperatur im Saugrohr. Es sind jedoch auch alle weiteren Parameter geeignet, die auf den Verbrennungsprozess Einfluss haben. Eine Soll-Füllung 16 wird mit der Ist-Füllung 20 verglichen. Die Soll-Füllung 16 ist eine feste Größe, die bei einem bestimmten Ladedruck vorhanden sein soll. Der erforderliche oder gewünschte Ladedruck steht jedoch nicht immer spontan zur Verfügung, sondern muss u.U. erst aufgebaut werden, was eine zeitliche Komponente beinhaltet. Bei herkömmlichen Verfahren wird, wenn beispielsweise der Ladedruck (noch) nicht ausreicht, die AGR-Rate zurückgenommen oder in einem Magerbetrieb zwangsweise vollständig auf Null gesetzt. Dies ist bei dem erfindungsgemäßen Verfahren nicht mehr zwingend notwendig.

Das erfindungsgemäße Verfahren korrigiert die Regelgröße, beispielsweise für die AGR-Rate, in mindestens drei Dimensionen, wobei auch mehr als drei möglich ist, was mehr Variationsmöglichkeiten in Bezug auf die Korrektur bzw. Adaption der Regelgröße eröffnet. So fließen neben dem Drehmoment und der Leistung zwar auch die Abweichung der Sollfüllung in den Korrekturwert mit ein, jedoch nicht durch ein Basis-Kennfeld. Vielmehr wird eine Auswahl von Korrektur-Kennfeldern in Block 24 geschaffen, in die neben beispielsweise den Füllungsgradienten weitere, den Verbrennungsprozess beeinflussende Parameter einfließen. Somit muss das AGR-Ventil nicht zwingend geschlossen werden. Eine Abgasrückführung kann damit auch im Mager-Betrieb erfolgen.

Die Fahrdynamik, gerade im Magerbetrieb, muss dadurch nicht auf Kosten oder zu Gunsten der Emissionswerte beeinflusst werden. Die erfindungsgemäße Sollwertstruktur der Luftsystemregelung berücksichtigt die besonderen Anforderungen der Dynamik und kann dadurch einen gezielten Kompromiss zwischen Verbrauch, Emissionen und Fahrdynamik auch in Betriebspunkten mit Dynamik herstellen.

## Patentansprüche

1. Verfahren zum Betreiben einer Brennkraftmaschine, wobei in Abhängigkeit von einer Differenz eines Sollwertes und eines Istwertes eines die Verbrennung beeinflussenden ersten Parameters, der eine Verbrennungsluftfüllung oder ein Ladedruck ist, und zusätzlich in Abhängigkeit von mindestens zwei weiteren Betriebsparametern der Brennkraftmaschine, welche eine Last und eine Drehzahl umfassen, eine Regelgröße für einen die Verbrennung beeinflussenden zweiten Parameter, der eine Abgasrückführrate (AGR-Rate) oder eine Abgasrückführmasse (AGR-Masse) ist, bestimmt wird, **dadurch gekennzeichnet, dass** zur Bestimmung der Regelgröße für den die Verbrennung beeinflussenden zweiten Parameter aus einer Mehrzahl vorbestimmte Kennfelder, welche die Regelgröße in Abhängigkeit von den mindestens zwei weiteren Betriebsparametern der Brennkraftmaschine enthalten, ein Kennfeld in Abhängigkeit von der Differenz des Sollwertes und des Istwertes des die Verbrennung beeinflussenden ersten Parameters ausgewählt wird und aus diesem ausgewählten Kennfeld in Abhängigkeit von den mindestens zwei weiteren Betriebsparametern der Brennkraftmaschine die Regelgröße bestimmt wird.

2. Verfahren nach Anspruch 1, **dadurch gekennzeichnet, dass** die mindestens zwei weiteren Betriebsparameter der Brennkraftmaschine zusätzlich mindestens einen der folgenden Betriebsparameter umfassen, eine Regelabweichung einer Füllungsmasse, eine Regelabweichung eines Verbrennungsluftmassendurchsatzes, einen Gradient einer Füllungsmasse oder eine Temperatur in einem Saugrohr für Verbrennungsluft der Brennkraftmaschine.

## Claims

1. Method for operating an internal combustion engine, wherein, as a function of a difference between a setpoint value and an actual value of a first parameter which influences the combustion and is a combustion air charge or a charge pressure and additionally is a function of at least two further operating parameters of the internal combustion engine which comprise a load and a rotational speed, a controlled variable for a second parameter which influences the combustion and is an exhaust gas recirculation rate (EGR rate) or an exhaust gas recirculation mass (EGR mass) is determined, **characterized in that** in order to determine the controlled variable for the second parameter which influences the combustion from a multiplicity of predetermined characteristic diagrams which contain the control variable as a function of the at least two further operating parameters of the internal combustion engine, a characteristic diagram is selected as a function of the difference between the setpoint value and the actual value of the first parameter which influences the combustion, and the control variable is determined from this selected characteristic diagram as a function of the at least two further operating parameters of the internal combustion engine.

2. Method according to Claim 1, **characterized in that** the at least two further operating parameters of the internal combustion engine additionally comprise at least one of the following operating parameters, a control error of a charge mass, a control error of an internal combustion engine air mass throughput rate, a gradient of a charge mass or a temperature in an intake manifold for combustion air of the internal combustion engine.

## Revendications

1. Procédé permettant de faire fonctionner un moteur à combustion interne, dans lequel on détermine, en fonction d'une différence entre une valeur de consigne et une valeur réelle d'un premier paramètre influençant la combustion, qui est une charge d'air de combustion ou une pression de suralimentation, et en outre en fonction d'au moins deux autres paramètres de fonctionnement du moteur à combustion interne, qui comprennent une charge et un nombre de tours, une grandeur de régulation pour un second paramètre influençant la combustion, qui est un taux de recyclage de gaz d'échappement (taux de ASR) ou une masse de recyclage de gaz d'échappement (masse de AGR), **caractérisé en ce que** pour la détermination de la grandeur de régulation pour le second paramètre influençant la combustion, on sélectionne parmi une multiplicité de diagrammes caractéristiques prédéterminés, qui contiennent la grandeur de régulation en fonction desdits au moins deux autres paramètres de fonctionnement du moteur à combustion interne, un diagramme caractéristique en fonction de la différence entre la valeur de consigne et la valeur réelle du premier paramètre influençant la combustion et on détermine la grandeur de régulation à partir de ce diagramme caractéristique sélectionné en fonction desdits au moins deux autres paramètres de fonctionnement du moteur à combustion interne.

2. Procédé selon la revendication 1, **caractérisé en ce que** lesdits au moins deux autres paramètres de fonctionnement du moteur à combustion interne comprennent en plus au moins un des paramètres de fonctionnement suivants, un écart de régulation d'une masse de remplissage, un écart de régulation d'un débit massique d'air de combustion, un gradient d'une masse de remplissage ou une température dans un conduit d'aspiration pour l'air de combustion du moteur à combustion interne.
